# EUROPEAN PATENT APPLICATION

(11) **EP 1 953 383 A1**
(43) Date of publication of application: **06.08.2008**
(21) Application number: 06841667.6
(22) Date of filing: 27.10.2006
(51) Int. Cl.: F03D 1/06

(54) **SPLIT-BLADE FOR WIND GENERATORS**

(30) Priority: 28.10.2005 ES 200502633
(71) Applicant: Gamesa Innovation & Technology, S.L., 31013 Pamplona Navarra (ES)
(72) Inventor: LLORENTE GONZÁLEZ, Jose, Ignacio, E-31013 Pamplona (ES); VÉLEZ ORIA, Sergio, E-31013 Pamplona (ES)
(86) International application number: PCT/ES2006/000595
(87) International publication number: WO 2007/051879

(57) **Abstract**

The invention relates to a split-blade for wind generators, consisting of two or more segments (6 and 7) which are joined consecutively to one another using rigid connections. The axes of the aforementioned segments form an angle of more than 180 DEG on the side facing the wind generator tower (1).

## Description

### Field of the invention

This invention refers to a split blade for wind generators, comprised by at least two segments joined together and constituted in a manner which prevents the tip of the blade from hitting the tower due to the blade bending in cases of extreme loads, whilst hardly increasing the bending moment caused by the weight of the blades on the tower, due to the centre of gravity of said blades being distanced as little as possible from the axis of the tower.

One of the main criteria in the design of blades for wind generators is blade tip deflection in certain cases of extreme load. The great length and flexibility of the blades causes the risk of impact, when passing the tower, between the blade and tower if the blade is not correctly sized. Current regulations even regulate said maximum tip deflection. This means that, depending on the structure of the blade, size is the predominant design criteria, and is therefore directly responsible for the weight and cost of the blade. Moreover, on increasing the size of the blade or distancing its centre of gravity from the axis of the tower, the loads are increased on the rest of the wind generator, with said design criteria thereby indirectly responsible for the weight and cost of the wind generator.

### Background of the invention

In order to stop or reduce the risk of impacts between the blade and the tower, without having to resort to the design criteria of size, one technique that is already known is that of providing the blade with a camber, with which to increase the distance between the blade tip and tower, thus counteracting blade tip deflection, yet consequently increasing the distance between the centre of gravity of the blades and the axis of the tower, which causes loads on the wind generators to be increased.

EP 01019631 describes a blade for wind generators which changes the geometry of the blade, giving it a certain curvature along the end third of the blade. This curvature causes the distance between the tip of the blade and tower to increase, thus providing the camber and avoiding the risk of impact with the tower. However, the blade described in this patent is comprised of only one part and therefore presents the classic problem of transport to the wind generator erection point.

Another form of achieving a camber in the blades is described in WO-03060319. According to said patent, the connection of the blades with the rotor hub is performed at plane not perpendicular to the axis of the blade, but which forms a certain angle with the same whereby the required camber is achieved at the blade tip to prevent the risk of collision between said tip and the tower.

As with the previous case, the invention is applied to blades of only one part.

The same aforementioned concept, the formation of a certain angle of the blade from the rotor hub hereinafter referred to as "root angle", is described in US patents US 20030227174, in which the blades are split; and EP 0368374, where the rotor includes two blades of only one part and the root angle is variable.

Finally US 4533297 can be quoted, which encompasses both of the aforementioned concepts applied to a split blade: root angle and intermediate inclination angle. The first is achieved by making the blade stem from the rotor hub at a certain angle and the second is achieve by connecting two segments of each blade with a connector that includes an articulation, and joining the tip and connector of each blade with the tip and connectors of the adjacent blades by means of different cables. By means of the connectors between the segments of each blade and by regulating the length of the cables, the angle of the end segment of the blades can be defined. In this case, although the blades are split, the intermediate inclination angle requires a connector between segments, comprising an articulation, and cables with which, by adjusting the length, said intermediate inclination angle is set, all of which leads to a complicated and costly structure with unsafe behaviour in the event of climatic inclemencies.

In the aforementioned documents little or no mention is made of the repercussions of the increased in distance between the centre of gravity of the blades and the axis of the tower, and therefore do not consider the increase in loads as a consequence of the bending moment that it causes.

### Description of the invention

The object of this invention is a split blade for wind generators, comprised by two or more sections consecutively connected by rigid connections, and on which at least the axes of the end segments together form an angle greater than 180°, on the side opposite the tower, whereby, because the internal segment or segments are parallel to the axis of the tower, the outermost segment will travel in a divergent direction in respect to said axis. In this manner, the blade will have a camber which will increase the distance between the end of the blade and tower.

To do so, in accordance with one embodiment, the adjacent end portions of consecutive segments will define a seating and connection plane between the same which is not perpendicular to the axis of the blade, but forms a certain angle with the same. The aforementioned seating plane coincides with the bisector of the angle defined by the axes of the two segments.

To achieve this arrangement, in accordance with the invention, on the connection of two consecutive segments, the end transversal segment of one of the sections must be inclined in relation to the axis of said segment, with an inclination angle that will allow the required camber to be achieved for the end of the blade and, thus, increase in the distance between the end of said blade and the tower.

According to another embodiment, the angle between consecutive segments can be achieved by inserting a wedge between the adjacent transversal sections of said segments. In this case, said sections could be perpendicular to the axis of the corresponding segment.

The intermediate inclination angle can also be achieved by inclining the adjacent end transversal segments of two consecutive segments. In this case, the two transversal end sections may have the same or a different inclination, provided that the inclination of both creates the required intermediate inclination angle.

The rigid connection between consecutive segments can be achieved by any system, for example, as described in application PCT/ES 2005/100168, of the same applicants.

Understandably, the blades may be comprised by two or more segments and the object of the invention may be applied only between two consecutive segments or at the connection between two segments.

In addition, the blade of this invention could also have a particular root angle, so that the distance between the end of the blade and the tower were to be a result of the root angle and the intermediate inclination angle. With his embodiment, the segment furthest away from the root shall rotate in a cone of a greater coning angle than the segment closest to the root.

As the blade of this invention is a split blade, it reduces problems with transport to the wind generator installation site.

Also, as the connections between the segments of the blade are rigid, thus eliminating any articulations and connection cables between the blades, better aerodynamics are achieved, given that it has a continuous blade. Mobile parts are also eliminated, which translates into safer and more reliable operation, with a high level of resistance and less wear, or in other words, a longer useful life of the blades. With the blade of this invention, better behaviour in the event of climatic inclemencies and a better vibration ratio can also be achieved. With the resulting configuration of the connection between the different segments of the blade, as described above, the centre of gravity of the group of blades, and therefore that of the group of blades, the rotor and the,nacelle elements, is closer to the axis of the tower, thus reducing the bending moment produced by the weight of the blades themselves on the tower, which will result in an improvement to the design criteria for the wind generator.

### Brief description of the drawings

The object of the invention can be better understood with the following description, making reference to the attached drawings, which show in a schematic form, for example purposes and not limited to, of a possible embodiment.

In the drawings:
Figure 1 is a schematic elevation of a wind generator constituted according to the invention, on which the blades have an intermediate inclination angle.
Figure 2 is a view similar to figure 1, in which the blades of the wind generator have a root angle and an intermediate inclination angle.
Figure 3 shows a schematic section of the connection between the two consecutive segments of a wind generator blade, according to the invention.
Figure 4 is a view similar to figure 3, showing a variant of this execution.
Figure 5 is a schematic section similar to figure 3, showing a second variant of this execution.
Figure 6 is a view similar to figure 1, showing a wind generator with the blades sub-divided into three segments, according to the invention.

### Detailed description of an embodiment

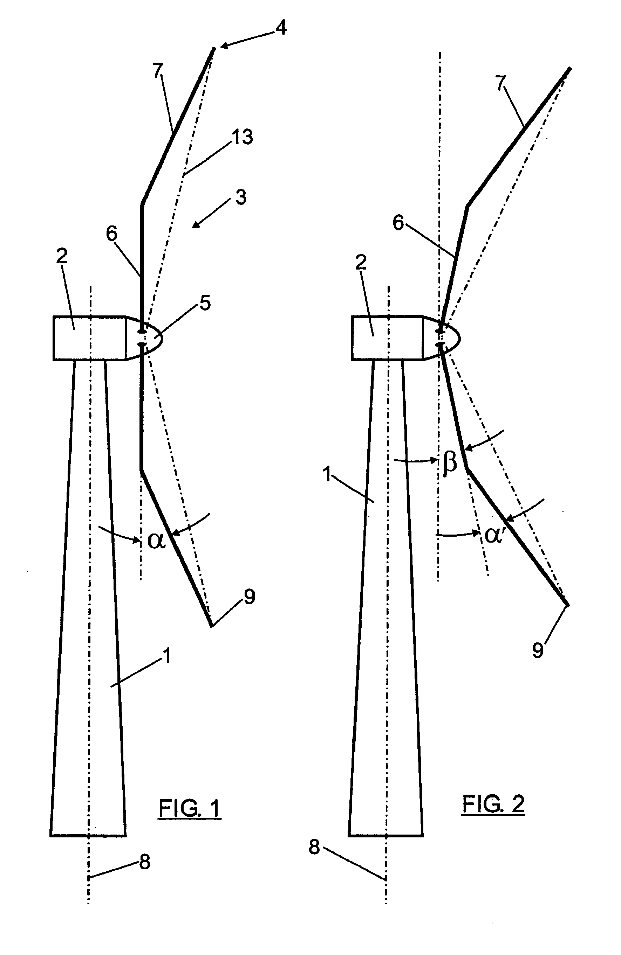

Figure 1 shows a wind generator that includes a column or tower 1 with a nacelle 2 mounted upon it, which includes an alternator activated by a rotor 3 comprising blades 4 stemming from a central hub 5.

The blades 4 in the example are comprised by two segments, one internal section 6, which is parallel to the axis 8 of the column and is connected at the hub 5 in the traditional manner, and an external segment 7 which forms an intermediate inclination angle α with the internal segment 6. This arrangement means that the group of blades 4 has a camber which distances the tip 9 of the blades from the column or tower 1 in respect to the blade that would follow the direction of the internal segment 6, parallel to the axis 8 of the column.

Figure 2 shows a wind generator of a similar constitution, where the internal segment 6 of the blades forms a root angle β with the axis 8 of the column. In addition, the external segment 7 of the blades forms an angle α' with the internal segment 6, so that the tip 9 of the blades is separated from the tower 1 by a distance with is the function of angles β and α'.

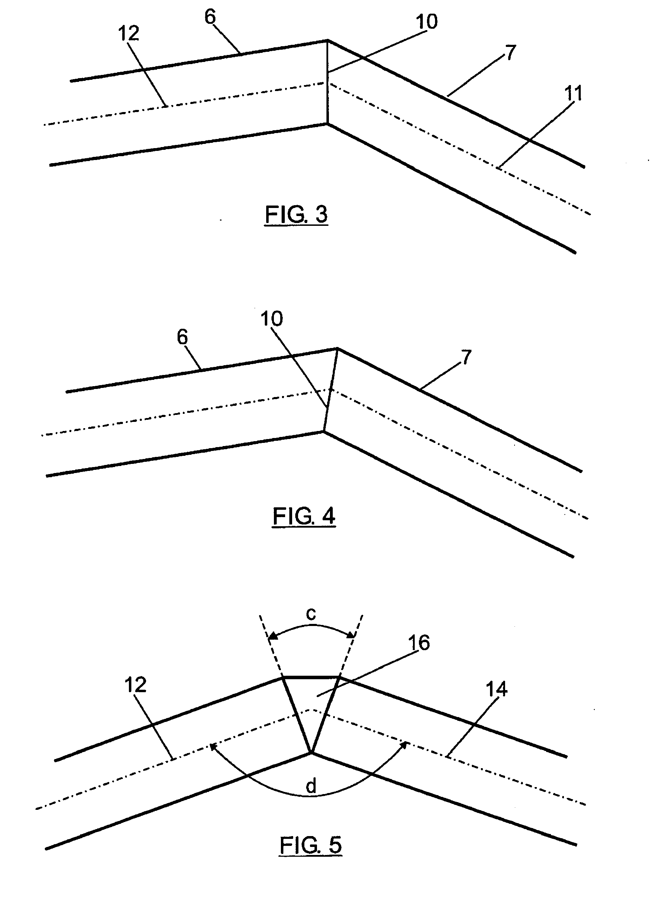

According to the invention, the connection between segments 6 and 7 is rigid and can be executed by any known system. The α or α' angle can be achieved by providing one of the segments, segment 7 in the example shown in figure 3, with an end section 10 that forms an angle with the axis 11 of said segment that enables the required camber to be achieved between segments 6 and 7. In this case, the segment 6 will have an end section perpendicular to the axis 12 of said tower.

As shown in figure 4, the end sections of segments 6 and 7 can also have an inclination, either equal or different, referred to as number 10' which enables the same camber to be achieved between the segments as in the case of figure 3.

Figure 5 shows a variant of the execution where angle α or α' is corrected by intercalating an intermediate part 16 in the form of a wedge between the adjacent end sections of two consecutive segments 6 and 7, the angle of said wedge "c" shall be a supplement of the "d" angle formed between the axes 11 and 12 of segments 6 and 7.

With the aforementioned constitution, continuous blades can be obtained with the rigid connection of segments 6 and 7, providing better aerodynamic behaviour.

Depicted by a discontinuous line in figures 1 and 2 is a blade 13 formed by only one part which would have a camber equivalent to the blade of the invention formed by segments 6 and 7.

In any of the embodiments shown in figures 1 and 2, segments 6 and 7 form an angle greater than 180° on the side facing the tower 1, which means that the end segment 7 travels in a divergent direction in respect to the axis 8 of the tower, with the end 9 of the blades thus distanced from the same.

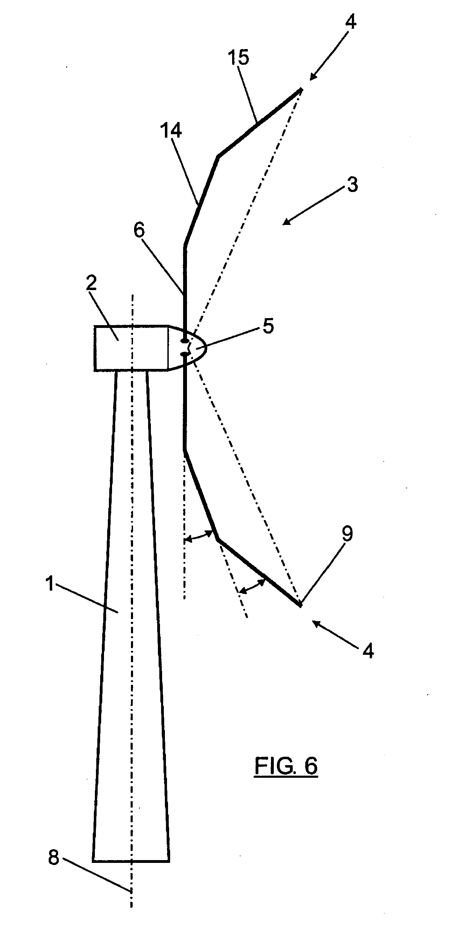

Figure 6 shows a wind generator with a constitution generally the same as that shown in figure 1, using the same references to refer to the same elements. The difference lies in that the blades 4 are sub-divided into three segments, one internal segment 6 which, as in figure 1 stems from the hub 5 and is parallel to the axis 8 of the column, one intermediate section 14, which forms an angle β with segment 6, and an external section 15, which forms an angle γ with the intermediate segment.

This constitution will facilitate transport of the blades and enable the blades to have a greater camber, which will further distance the end 9 of the blade from the tower 1.

## Claims

1. Split blade for wind generators, comprised by two or more segments consecutively connected, **characterised in that** the connection between every two consecutive segments is rigid and the axes of said segments form an angle greater than 180° on the side facing the tower of the wind generator, with the end segments travelling in a divergent direction in respect to the axis of the tower.

2. Blade according to claim 1, **characterised in that** on the connection of two consecutive segments, said segments are directly support by each other by their transversal sections and at least one of said sections has an inclination in respect to the axis of the corresponding segment with an angle which is supplementary with the lesser angle formed between the axes of said segments.

3. Blade according to claim 1, **characterised in that** the adjacent transversal sections of consecutive segments are perpendicular to the axes of said segments and the connection of the same is executed by inserting a rigid wedge like part between said sections, the angle of which is supplementary with the lesser angle formed between the axis of said segments.
